# EUROPEAN PATENT SPECIFICATION

(11) **EP 1 053 458 B1**
(45) Date of publication and mention of the grant of the patent: **24.07.2002**
(21) Application number: 98906150.2
(22) Date of filing: 04.02.1998
(51) Int. Cl.: G01L 5/16, G01L 17/00, G01M 17/02

(54) **TRIAXIAL FORCE PIN SENSOR ARRAY**
ANORDNUNG MIT DREIACHSIGEN STABFÖRMIGEN KRAFTSENSOREN
MOSAIQUE DE CAPTEURS DE FORCES TRIAXIALES A BROCHES

(43) Date of publication of application: 22.11.2000
(73) Proprietor: THE GOODYEAR TIRE & RUBBER COMPANY, Akron, Ohio 44316-0001 (US)
(72) Inventor: RICHARDS, Gary, William, Clinton, OH 44216 (US); CLARK, Samuel, Kelly, Ann Arbor, MI 48105 (US); STAN, Aurel, Vincent, Canton, OH 44718 (US)
(74) Representative: Leitz, Paul
(86) International application number: US9802186
(87) International publication number: WO9940404

(56) References cited:
- EP-A- 0 656 269
- US-A- 2 918 816
- US-A- 4 986 118

## Description

### TECHNICAL FIELD

This invention relates to a sensor array for measuring forces. More particularly, the present invention relates to a force pin, sensor array for measuring triaxial forces, such as those generated in the footprint of a tire.

### BACKGROUND ART

The prior art includes a variety of sensors incorporating strain gauges built into specialized instruments designed to measure forces on various objects.

For example, U.S. Patent No. 2,918,816 discloses an improved six-component strain gauge balance system for use in high pressure wind tunnels to measure simultaneously the six major forces and moments corresponding to the six degrees of freedom of any three dimensional body under test. The patent describes a cylindrical sleeve for attaching to the tested object and a core within the sleeve for attaching to a support in the wind tunnel. Annular torsion load cells, axial rhombic-shaped load cells, and diametrical cantilevered load cells are connected between the sleeve and core to measure the various forces.

In relation to pneumatic tires, European Patent No. 0 656 269 A1 discloses an essentially two-dimensional array of sensors used to indicate tire inflation by determining the distribution of contact forces over the footprint of a pneumatic tire. The sensors in the array measure only normal force, and are preferably flat detectors such as piezoelectric or piezoresistive polymer film sensors. A related U.S. Patent No. 5,396,817 concerns similar measurements utilizing a mainly linear array of strain gage sensors.

An example of meastring tire forces is seen in U.S. Patent No. 4,986,118 ('118) which discloses an array of force sensors, each separately constructed of a vertical hollow tubular member, either square or cylindrical in cross section, with strain gages secured to the vertical surfaces of the member to measure forces applied by a tire to the top bearing surface of the tubular member. Concentrically inside each tubular member is a motion sensor to measure relative tire tread motion. The motion sensor includes an elongated pin having a pointed tip extending beyond the bearing surface of the tubular member so that the tip penetrates the tread of the tire under test, and includes strain gages secured to the pin to indicate the motion of the pin and therefore the motion of the tread of the tire penetrated by the pin.

As disclosed in the '118 patent, the prior art includes sensors for measuring the contact pressure of a tire. For example, one prior art system included a plurality of individual pressure sensors in a transducer system to measure the local triaxial contact pressure and the tangential slip pressures in the contact patch, i.e. the "footprint", of a tire. This system allowed for measurements along each rib in a tread pattern of a tire to determine factors such as high local pressures and high slip pressures that cause uneven tire wear. The prior art sensors were stable, temperature compensated, high frequency transducers which were typically mounted in an array that was strong enough to support a moving tire.

The prior art pressure sensors, as described in a product description entitled "Tire-Road Contact Pressure Sensors" from PRECISION MEASUREMENT CO. of Ann Arbor, Michigan, included individual cantilever pins electrically connected to a temperature compensated strain gauge system that enabled each of the individual pins to simultaneously measure the vertical contact force, the fore-aft tangential force, and the lateral tangential force. A concern relating to the prior art contact pressure sensors was the use of a pressure member diaphragm (membrane) at the contact surface that was less sensitive at the edges than in the center of the membrane. Also, each of the prior art contact sensor pins was individually mounted which, due to geometric size limitations, enabled a limited number of pins to be joined together for individually measuring the forces generated in the footprint of a tire. In some cases, only a single triaxial force pin sensor was typically used to fully map the forces and pressures generated in the footprint. To fully map the forces generated in a tire footprint with the prior art system, the tire would be passed across a limited number of pressure contact sensors multiple times due to geometric considerations. The geometric consideration mentioned above relates to the minimum center to center distance between adjacent contact pressure sensors.

### OBJECTS AND SUMMARY OF THE INVENTION

It is an object of the present invention to provide a triaxial force pin sensor array, the triaxial force pin sensor array being as defined in one or more of the appended claims and, as such, having the capability of being constructed to accomplish one or more of the following subsidiary objects.

It is an object of the present invention to provide a triaxial force pin sensor array for measuring triaxial forces, such as those generated in the footprint of a tire, that obviates the problems and limitations of the prior art systems.

It is another object of the present invention to provide a triaxial force pin sensor array that incorporates a modular design that allows for rapid replacement of defective sensor array elements.

Another object of the invention is to provide a method of measuring the actual forces generated in the footprint of a tire with a triaxial force pin sensor array that substantially prevents dirt and contamination from affecting force measurements.

Yet another object of the invention is to provide a triaxial force pin sensor array which reduces electromagnetic interference (EMI) and radio frequency (RF) contamination of the sampled data signals.

A still further object of the present invention is to provide a triaxial force pin sensor array which exhibits uniform response in the normal direction, F_{z}, regardless of contact location with individual triaxial force pins of the sensor array.

Another object of the present invention is to provide a triaxial force pin sensor array that features mechanical overload protection.

Still another object of the invention is to provide a triaxial force pin sensor array which includes a high density of individual force pin sensors.

Accordingly, there is provided a triaxial force pin sensor array module that has two triaxial force pin sensor arrays mounted together. Each of the triaxial force pin sensor arrays has a plurality of cantilever force pins to measure the local normal pressure and the tangential force applied to an upper contact surface of the pins. The individual cantilever force pins have a region of reduced cross section extending around the circumference thereof and two slots disposed in opposite facing directions between the region of reduced cross section and the contact surface. The slots are disposed in spaced relation to the upper contact surface forming a shear plate or web whose sensitivity to the contact pressure is determined by the thickness of the web between the reduced section and the diameter of internal bore extending through the web. Sensors are mounted to the opposite facing side surfaces of the cantilever force pins in the region of reduced cross section and to a surface in between the two slots.

According to the invention, the triaxial force pin sensor array module is preferably constructed of a material having a material proportional limit of at least about 30,000 pounds per square inch (psi) (2.07 x 10⁸ newtons/meter³ (n/m²)) and up to about 100,000 psi (6.89 x 10⁸ n/m²), such as for example aircraft aluminum or beryllium copper. The high material proportional limit insures that the force pins will move from the forces applied thereto without any plastic deformation in the range possible due to the location of an adjacent pin or side wall of the sensor array. The construction material preferably has natural shielding capability which reduces electromagnetic interference (EMI) and radio frequency (RF) contamination of the sampled data.

Further in accordance with the invention, a sealant, such as a silicone rubber, having a modulus between about 100 pounds per square inch (psi) (6.89 x 10⁵ n/m²) and about 1000 psi (6.89 x 10⁶ n/m²) is disposed about each of the cantilever force pins to prevent dust and dirt particles from accumulating therebetween while not materially affecting the movement of the pins.

### IN THE DRAWINGS

The structure, operation, and advantages of the presently preferred embodiments of the invention will become further apparent upon consideration of the following description taken in conjunction with the accompanying drawings.
Figure 1 is a three dimensional view of a triaxial force pin sensor array in accordance with the present invention;
Figure 1A is a side view through line 1A-1A of Figure 1 showing the triaxial force pin sensor array;
Figure 2 is a bottom view through line 2-2 of Figure 1A;
Figure 3 is a top view through line 3-3 of Figure 1A;
Figure 4 is a view through line 4-4 of Figure 1A;
Figure 5 is a schematic illustration of a single sensor pin of the triaxial force pin sensor array of Figure 1;
Figure 5A is an enlarged view of the top portion of the triaxial force pin rotated 180° from the position shown in Figure 5;
Figure 5B is an enlarged view of the central portion of the triaxial force pin shown in Figure 5;
Figure 6 is an assembly view of two triaxial force pin sensor arrays mounted together to form a triaxial force pin sensor array module;
Figure 7 is an assembly view of a triaxial force pin sensor array module mounted in a frame;
Figure 8A is an alternative embodiment of a force pin having a radiused contact surface;
Figure 8B is an alternative embodiment of a force pin having a convexed contact surface; and
Figure 8C is an alternative embodiment of a force pin having a concaved contact surface.
Figure 9 is a schematic illustration of a bridge circuit associated with the force pin sensors of the triaxial force pin sensor array of the present invention for measuring forces, such as those generated in the footprint of a tire;

### DETAILED DESCRIPTION OF THE INVENTION

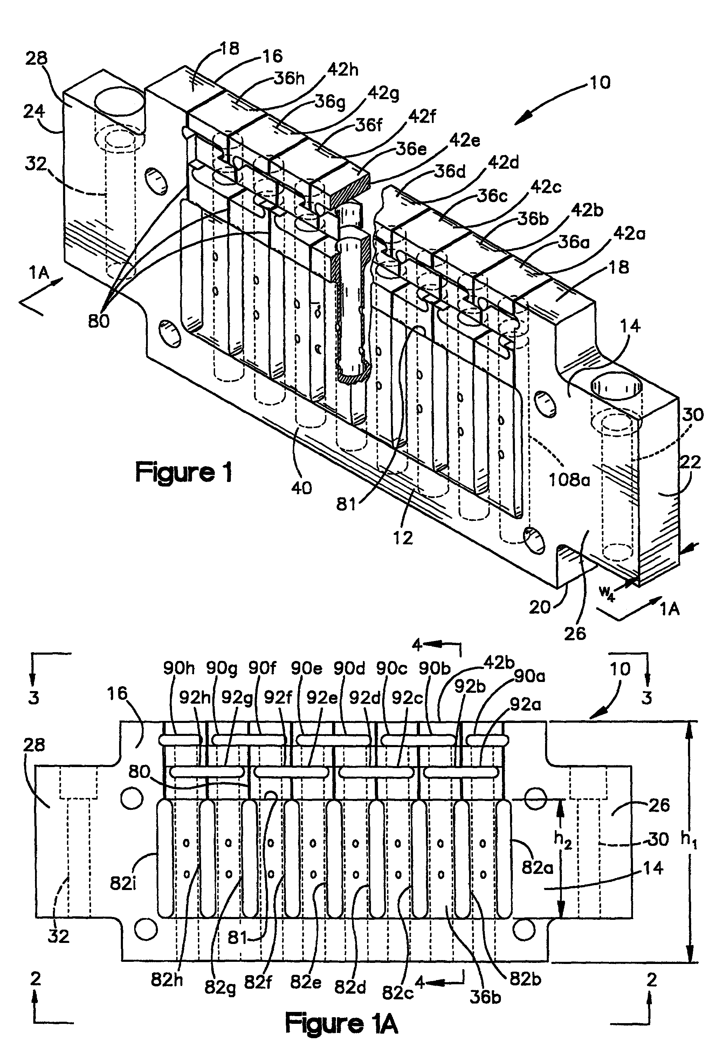

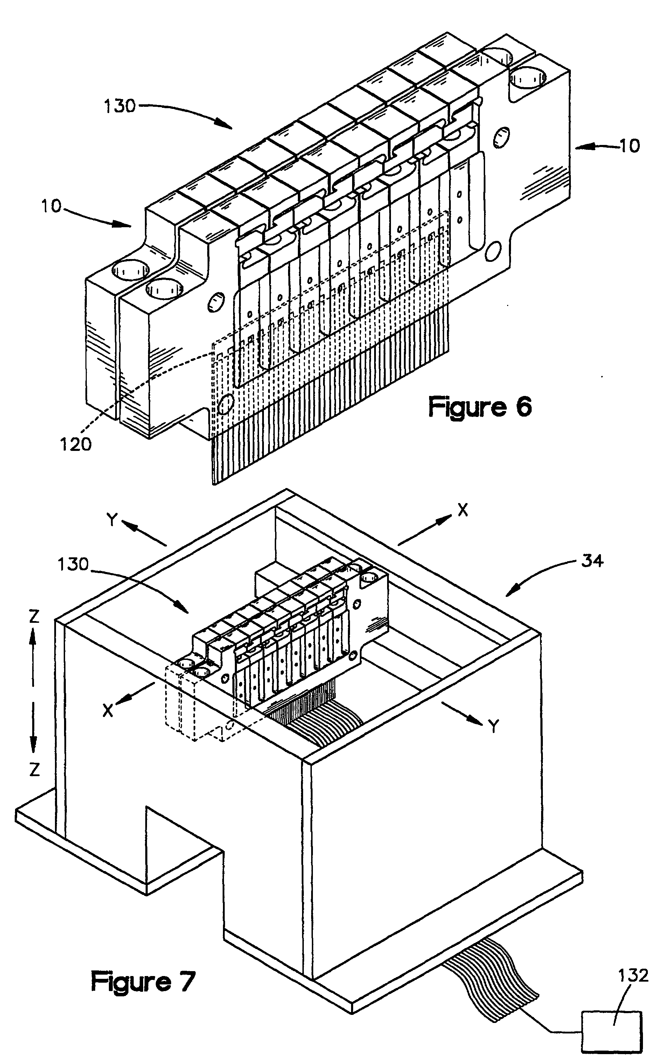

Referring to Figure 1, there is illustrated a three-dimensional view of a triaxial force pin sensor array 10 in accordance with the present invention. The sensor array 10 includes a force pin support structure 12 having a first and second opposite side portions 14 and 16, upper and lower end surfaces 18 and 20, and first and second side surfaces 22 and 24. At either side of the support structure 12 there is located a mounting portion 26 and 28 having a throughbore 30 and 32, respectively, through which an attachment bolt (not shown) secures the sensor array 10 to a sensor array mounting frame structure 34 as illustrated in Figure 7 and discussed in detail hereinafter.

### CANTILEVER TRIAXIAL FORCE PINS

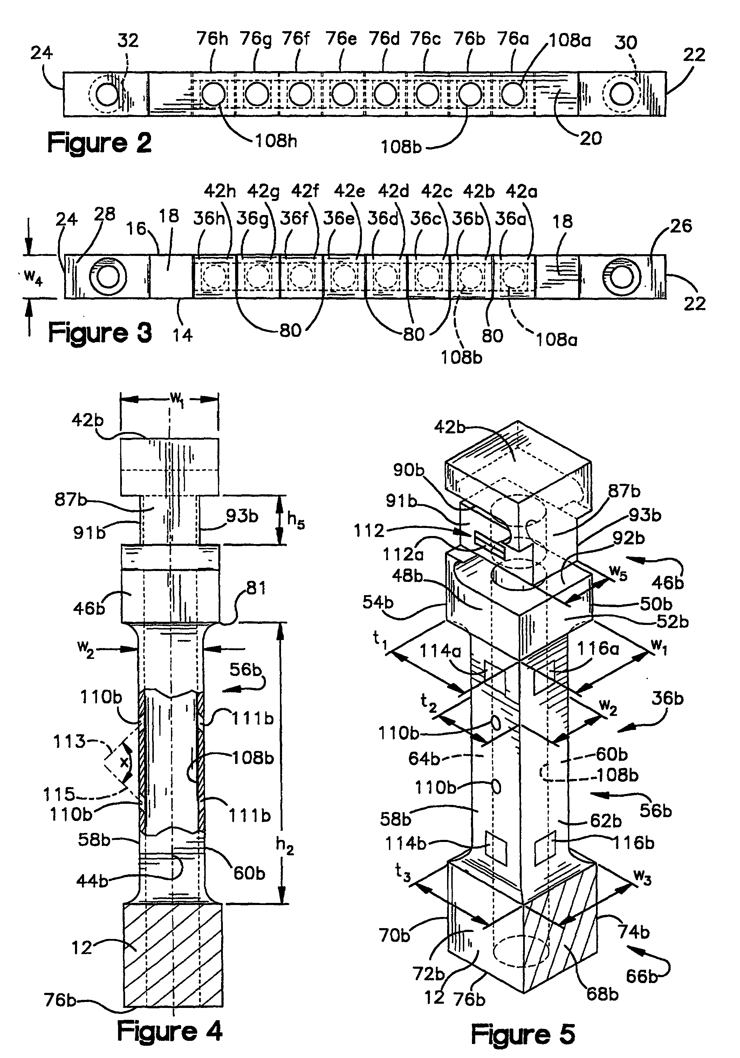

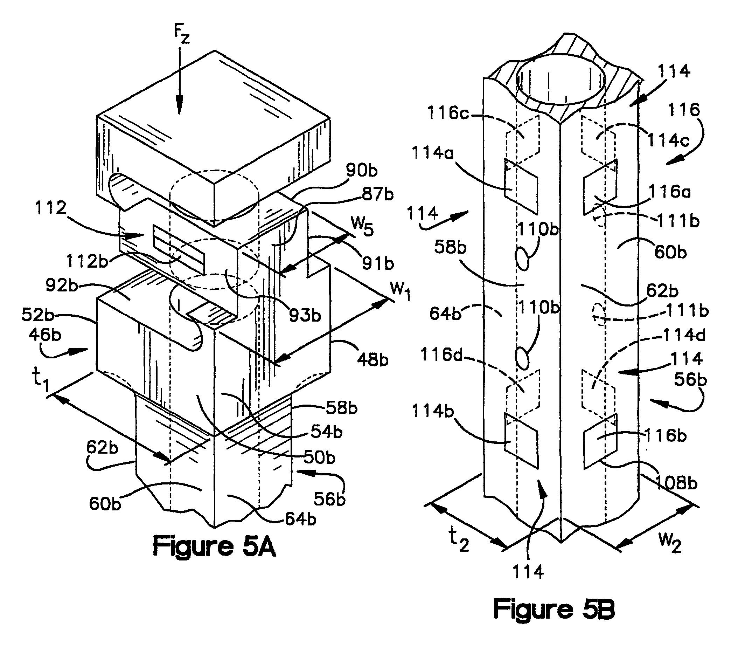

Preferably, the support structure 12 includes a plurality of cantilever triaxial force pins 36a, 36b, 36c, 36d, 36e, 36f, 36g, 36h(36a-36h), which are located adjacent to each other and are integrally attached to the base portion 40 of the support structure 12. Each of the cantilever force pins 36a-36h are identical and therefore only pin 36b, as illustrated in Figures 4, 5, 5A, and 5B, is described in detail since the details of the construction of each triaxial pin are substantially the same. While eight cantilever force pins 36a-36h are illustrated, it is within the terms of the invention to provide more or fewer cantilever force pins depending upon the specific application.

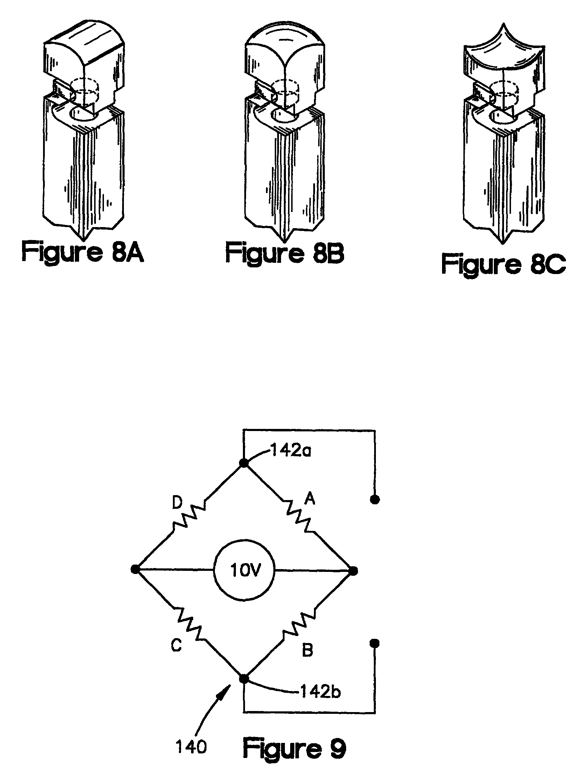

Cantilever pin 36b has an upper contact surface 42b which can be flat, radiused, convexed or concaved, as shown in Figures 5, 8A 8B, and 8C, respectively. In the preferred embodiment of the invention, the contact surface 42b is flat as shown in Figure 1. The forces being measured, typically those generated in a tire footprint, are transferred to the contact surface of each of the cantilever pins 36a-36h. The contact surface 42b (see Figures 4 and 5) of cantilever pin 36b preferably has a rectangular cross-section disposed in a plane perpendicular to the longitudinal axis 44b extending through the cantilever pin, although it is within the terms of the invention to construct the cantilever pins 36a-36h with alternate cross-sections, such as for example, circular and oval cross-sections.

Pin 36b, as shown in Figures 4, 5, 5A and 5B, has an upper portion 46b with a rectangular or square cross-section that has opposite front and rear surfaces. 48b and 50b, respectively, spaced a distance w₁ from each other and opposite side surfaces 52b and 54b spaced a distance t₁ from each other. Below the upper portion 46b is an intermediate portion or region 56b which also has a substantially rectangular or square cross-section that has opposite front and rear surfaces 58b and 60b, respectively, spaced a distance w₂ between each other and opposite side surfaces 62b and 64b, respectively, spaced a distance t₂. The upper portion 46b is contiguous with and integrally attached to the intermediate portion 56b by a plurality of curved surfaces which extend around the perimeter of the force pin, i.e., interconnecting surfaces 48b and 58b, surfaces 50b and 60b, surfaces 52b and 62b, and surfaces 54b and 64b, as best seen in Figure 5A. A feature of the invention is that the distances w₁ and t₁ between the opposite surfaces in upper portion 46b are longer, respectively, than the corresponding opposite surfaces in intermediate portion 56b having distances w₂ and t₂. Below the intermediate portion 56b is a base portion 66b which also has a substantially rectangular or square cross-section and has opposite front and rear surfaces 72b and 74b spaced a distance w₃ from each other and opposite side surfaces 68b and 70b, respectively, spaced a distance t₃ from each other. The intermediate portion 56b is contiguous with and integrally attached to the base portion 66b by a plurality of curved, concave surfaces, as best seen in Figure 5. The bottom surface 76b of pin 36b is contiguous with and forms an integral portion of base portion 40 of support structure 12. Since the pins 36a-36h are each attached solely at the bottom of their intermediate portion, i.e. by the concave surfaces to the base portion of the support structure 12, the pins are effectively mounted in a cantilevered manner with respect to base portion 40.

### TRIAXIAL FORCE PIN SENSOR ARRAY

The triaxial force pin sensor array 10, which includes a plurality of cantilever triaxial force pins 36a-36h, can be machined from a single block of material into a shape as generally shown in Figures 1, 1A, 2 and 3. That is, the block of material is initially shaped into a generally rectangular form having a distance w₄ in the mounting portions 26 and 28 and a height h₁ between the upper end surface 18 and the lower end surface 20, see Figures 1 and 1A. A plurality of slits 80 are open at the upper end surface 18 of the support structure 12 and extend to the location 81 which coincides with the upper end of elongated through-slots 82a-82i between adjacent triaxial force pins 36a-36h, as discussed in detail below.

Continuing, a plurality of generally oval shaped channels 82a, 82b, 82c, 82d, 82e, 82f, 82g, 82h, 82i (82a-82i) of height h₂ extend completely through the distance w₄ of the support structure 12 as generally shown in Figure 1A. Each of these channels 82a-82i reduces the width of pins 36a-36h from the initial spacing of t₁, as in the upper portion 46b, to the spacing t₂ in the intermediate portion 56b, as shown in Figure 5. Then the front and rear surfaces 58b, 60b, respectively of intermediate portions 56b of pin 36b, as well as the remainder of the pins, are formed so that the intermediate portions 56a-56h are rectangular or square about a longitudinal axis 44a-44h (only 44b being illustrated) extending through the pins. The intermediate portions 56a-56h each have four curved, concave surfaces extending about the upper end and contiguously joined with the upper portions 46a-46h of the pins 36a-36h, respectively. The intermediate portions also have four curved, concave surfaces extending about the lower end which are joined contiguously with the base portions 66a-66h of the pins 36a-36h, respectively.

A pair of slots 90a, 90b, 90c, 90d, 90e, 90f, 90g, 90h (90a-90h) and 92a, 92b, 92c, 92d, 92e, 92f, 92g, 92h (92a-92h) with radiused closed ends for each pin 36a-36h, as shown in Figures 1A, 5 and 5A, extend from the front surface 48b to the rear surface 50b of the exemplary cantilevered pin 36b. The upper slots 90a-90h are parallel with their corresponding lower slots 92a-92h in each pin 36a-36h, respectively. The pair of corresponding upper and lower slots for each pin open outwards from opposite facing side surfaces, i.e., 48b and 50b in the example of pin 36b. A connecting section 87b, extending a distance h₅ between the upper slot 90b and the lower slot 92b, has front and rear facing surfaces 91b and 93b which are recessed inward from the front and rear surfaces 48b and 50b, respectively, of portion 46b and are spaced from each other a distance w₅ which is less than distance w₁. Preferably, the front and rear facing surfaces 91b and 93b are each in a plane which is parallel to the planes in which the front and rear surfaces 48b and 50b of upper portion 46b are disposed. The orientation of slots in adjacent pins may be mirror imaged to facilitate machining operations. With this configuration, normal loads (F_{z}) can be accurately sensed regardless of contact position with the pin 36b on upper surface 42b. A plurality of blind bores 108a-108h extend up through the lower end 20 of the support structure 12 into each of the cantilever force pins 36a-36h, respectively. The blind bores 108a-108h pass through slots 92a-92h and open into slots 90a-90h to provide a passageway to receive electrical signal conducting wires (not shown), as discussed below. Also, a pair of spaced through holes 110a-110h are cut through each pin 36a-36h from the front side 58b to the internal bore 108b. Also a pair of through holes 111a-111h are cut from the rear side 60b of the pin and into the internal bore 108b, as shown in Figure 4. The sets of spaced through holes 110a-110h and 111a-111h are disposed preferably with their longitudinal axis 113, 115 forming an angle "x" of about 90°. The electrical signal conducting wires from the strain gauges, discussed below, are passed through the holes 110a-110h and 111a-111h and into their corresponding bores 108a-108h.

The material for constructing the support structure 12 is preferably a material selected from the group consisting essentially of aircraft aluminum (A12024) having a material proportional limit of 30,000 psi (2.07 x 10⁸ newtons/meter² (n/m²)) and beryllium copper (BeCu) having a material proportional limit of 100,000 psi. (6.89 x 10⁸ n/m²). While both the beryllium copper and the aircraft aluminum are effective for the present design of the pin sensor array 10, the beryllium copper is more advantageous in that it has a more durable wear surface and a higher material proportional limit. The higher material proportional limit is particularly important because it is desirable that as the force pins 36a-36h move, they will naturally return to their original positions without any plastic deformation. This is particularly the case in their movement towards one side 22 or the other side 24 of the support structure 12. With this movement, the pins 36a-36h will abut either against an adjacent pin or possibly side portions 14 and 16 in the case of pins 36a and 36h as a pin is moved from the forces applied thereto. Since the material proportional limit of the beryllium copper is high, any contact with an adjacent force pin or side portions 14, 16 will automatically prevent plastic deformation of the moving pin because the material proportional limit of the sensor array 10 requires a greater degree of movement to achieve plastic deformation than that afforded by the distance between adjacent pins and/or the side portions. Another advantage of the beryllium copper is it being a relatively rigid material. A still further advantage of the beryllium copper is its natural shielding capability which reduces electromagnetic interference (EMI) and radio frequency (RF) contamination of the sampled data.

Three sets of strain gauges 112, 114, 116, as best shown in Figures 5, 5A, and 5B, are mounted onto each cantilever pin 36a-36h of the force pin support structure 12. For example, the first set of strain gauges 112 includes two dual strain gauges 112a and 112b which are mounted onto the side faces of reduced sections 91b and 93b, respectively, as shown in Figures 5 and 5A. The second set of strain gauges 114 as shown in Figure 5B, which includes four strain gauges 114a, 114b, 114c, 114d are mounted on opposite sides 56b and 60b, respectively, of the pin 36b in the intermediate portion 56b. The third set of strain gauges 116, which includes four gauges 116a, 116b, 116c and 116d, are located on the sides 62b and 64b, respectively, of intermediate portion 56b. Each of the strain gauge sets 112, 114, and 116 has signal conducting wires (not shown; which, in the case of strain pair 112 are directed through the bore 108b and out the lower open end for attachment to a circuit card 120 as described below. The strain gauge sets 114 and 116 have signal conducting wires disposed through bores 110b and 111b which intersect bore 108b so that the wires can also project outward from the open end of bore 108b, as shown in Figure 2. These signal conducting wires, which extend outwards from the lower end 20 of the support structure 12, can be attached to a circuit card 120 incorporating a plurality of copper strips. Two of the triaxial force pin sensor arrays 10 are mounted to opposite surfaces of the circuit card 120, as shown in Figure 6, by conventional means such as screws. This combination of two triaxial force pin sensor arrays with a circuit card therebetween, constitutes a single replaceable force sensor array module 130.

Because of the differences in operating environments, the strain gauges require proper thermal characteristics. Generally, strain gauges can be selected with thermal compensation for steel, copper or aluminum as determined by the material to which the gauges will be attached. Since the material from which the cantilever pins 36a-36h are constructed is preferably beryllium copper, copper compensated gauges will preferably be selected for the sets of strain gauges 112, 114 and 116. The gauges can be mounted by conventional means, such as an epoxy adhesive, to the pins.

### PROTECTIVE SEALANT

Around each of the cantilever pins 36a-36h, including within the slits 80, is provided a low modulus sealant to prevent dust and dirt particles from accumulating therein. The sealant has a modulus of between about 100 psi (6.89 x 10⁵ n/m²) and 1000 psi (6.89 x 10⁶ n/m²). It is believed that a modulus below about 100 psi, which would typically be a gel, would lack the adhesion needed to be utilized for the purpose of preventing the accumulation of dirt and dust particles. On the other hand, if the modulus became too high, such as above about 1000 psi, the material would prevent the free movement of the pins as needed. A preferred material is a silicone rubber RTV No. 3140 from Dow-Corning.

### SENSOR ARRAY MODULE

Preferably, a complete triaxial force pin sensor array module 130, as shown in Figure 6, would include two triaxial force pin sensor arrays 10 with a circuit card 120 having copper bars disposed there between. The signals from the sets of strain gauges 112, 114 and 116 can be taken directly from the sensor array modules 130 and then conditioned and processed in a data collecting system 132, as shown in Figure 7, such as for example a Datronic Model 10K7 measurement and control unit from Datronic Corporation of Miamisburgh, Ohio. In accordance with the invention, a single sensor array module 130 can be quickly and easily replaced, with a minimum of downtime, when defective. Moreover, the sensor array module 130 can be constructed with cantilever pins in close proximity in the x-x and y-y directions providing for high density measurements.

An important aspect of the cantilevered pin construction relates to the dimensional relationship within each pin 36a-36h. The lateral and tangential (fore-aft) compliance (measure of stiffness) is determined by the placement of the intermediate portion 56a-56h with respect to the base portion 66a-66h, respectively, and the upper portion 46a-46h, respectively. For example, as the intermediate portion 56a-56h is located closer to the bottom surface 76a-76h, respectively, the gain or total displacement of the upper surface 42a-42h increases for a given load. Moreover, the heights of the intermediate portions 56a-56h determines the maximum lateral or tangential load that can be applied before mechanical interference with an adjacent pin is reached.

In a like manner, the sensitivity for measurement of normal pressures or forces is governed by the selected width w₅ for shear plate members 87a-87h in conjunction with the depth of slots 90a-90h and 92a-92h, respectively. For example, as the width w₅ of shear plate member 87b, as shown in Figures 5 and 5A, is reduced, the response is increased for a given normal load. The distances w₂, t₂, and h₂ of the intermediate portion 56a-56h also affects the compliance or deflection of the corresponding cantilevered pin 36a-36h with a given lateral or tangential load.

The diameter of the blind bore 108a-108h also affects the compliance or deflection of its corresponding cantilevered pin. Thus, as the diameter of the bore 108a-108h increases, the compliance or deflection in the lateral, tangential and normal directions increases for a given load.

In a related aspect of the pin construction, dimensional variations pin to pin will naturally occur. These variations are accommodated by maintaining individual calibration values for each pin.

### STRAIN GAUGE MEASUREMENTS

The strain gauge sets 112, 114, 116 are mounted on pins 36a-36h to measure the normal and shear forces generated on the upper contact surfaces 42a-42h of the cantilever pins 36a-36h, respectively. For use with a tire, a plurality of the sensor array modules 130 can be mounted in a sensor array mounting frame structure 34, only a single module 130 being illustrated in Figure 7, so that the fore-aft direction, i.e. the direction in which the tire being measured rotates across the upper surface of the modules, is in an x-x direction to measure a complete tread element in a single pass. Transverse to the fore-aft direction is the lateral or y-y direction. The normal or load contact pressure is measured in the z-z direction. A second embodiment of the invention provides for rotation of the sensor array mounting frame structure 34 such that the x-x and y-y directions are inverted or reversed to measure an entire rib of a tire in a single pass over the triaxial force sensor array modules in box-like structure 34.

The upper set of strain gauges 112a and 112b measure normal load F_{z} on the shear plate section 87a-87h of the pins 36a-36h, respectively. The shear plate section 87a-87h is generally that section between the lower slots 92a-92h and the upper slots 90a-90h of the pins 36a-36h, respectively. As a load, such as a tire, rolls across the contact surfaces 42a-42h of a pin 36a-36h, the pin deflects to change the resistance of strain gauge pairs 112a and 112b of set 112.

In the same manner, the strain gauge sets 114 and 116 respond to movements of the upper contact surface 42a-42h in combinations of fore-aft and/or lateral directions. The signals generated by the strain gauge sets 112, 114, 116 are fed to Wheatstone bridges 140, as shown in Figure 9, with resistors A, B, C, D (represented as A-D), one on each side. While each of the resistors A-D, in the preferred embodiment, has a value of about 700 ohms, it is within the terms of the invention to select resistors of different values. For example, strain gauge pairs 112a and 112b are each wired in series and each pair has a value of about 700 ohms. The Wheatstone bridge 140 is typically excited with a voltage of about 10 volts, however the specific voltage is not a part of the present invention and other voltages can be used. As shown in Figure 9, the output signal is measured across points 142a and 142b, after the Wheatstone bridge has been balanced in a conventional manner. Each strain gauge set 112, 114, 116 represent two legs of a Wheatstone bridge, the remaining two legs, 700 ohms each (corresponding to the example of the preferred embodiment), are provided with bridge completion circuitry.

It is apparent that there has been provided in accordance with this invention a triaxial force pin sensor array that can be used for measuring the actual forces generated in the footprint of a tire. The triaxial force pin sensor array includes a high density of individual force pin sensors in a modular design that allows for rapid replacement of defective sensor array elements and substantially prevents dirt and contamination from affecting force measurements. The triaxial force pin sensor array further reduces electromagnetic interference (EMI) and radio frequency (RF) contamination of the sampled data signals. The triaxial force pin sensor array exhibits uniform response in the normal direction, F_{z}, regardless of contact location with individual triaxial force pins of the sensor array. Further, the triaxial force pin sensor array features mechanical overload protection.

While the invention has been described in combination with embodiments thereof, it is evident that many alternatives, modifications, and variations will be apparent to those skilled in the art in light of the foregoing teachings. Accordingly, the invention is intended to embrace all such alternatives, modifications and variations as fall within the scope of the appended claims.

## Claims

1. A triaxial force pin sensor, comprising
a cantilever force pin (36b) having an upper portion (46b) with an upper contact surface (42b) to measure the local normal force and/or the tangential forces applied to the upper contact surface; and a base portion (66b) integral with a base portion (40) of a support structure (12);
the cantilever force pin having an intermediate portion (56b) of reduced cross section between the upper portion and the base portion; and
two slots (90b, 92b) disposed across the upper portion of the cantilever force pin in spaced relation to the upper contact surface to form a shear plate section (87b), each of the two slots opening to opposite facing side surfaces (52b, 54b) of the cantilever force pin and being disposed at different distances from the upper contact surface.

2. The triaxial force pin sensor of claim 1, wherein the reduced cross section of the intermediate portion extends around the perimeter of the force pin so that the intermediate portion is rectangular with respect to an axis (44b) extending longitudinally through the cantilever force pin.

3. The triaxial force pin sensor of claim 1, wherein the cantilever force pin has a substantially square cross section in a plane normal to an axis (44b) extending longitudinally through the cantilever force pin.

4. The triaxial force pin sensor of claim 1, further comprising a circular bore (108b) extending through the cantilever force pin from the base portion to the slot closest to the upper contact surface.

5. The triaxial force pin sensor of claim 1, wherein the cantilever force pin is constructed of a material having a material proportional limit of at least 30,000 psi (207 MPa) to 100,000 psi (689 MPa).

6. The triaxial force pin sensor of claim 1, further comprising a triaxial force pin sensor array (10) comprising a plurality of cantilever force pins (36a-36h) having base portions (66a-66h) integral with a common base portion (40) of the support structure so that a side surface (52a-52h) of one of the plurality of cantilever force pins is facing a side surface (54a-54h) of an adjacent one of the plurality of cantilever force pins.

7. The triaxial force pin sensor of claim 6, further comprising a sealant around each of the plurality of cantilever force pins, the sealant having a modulus between 100 psi (0,689 MPa) and 1000 psi (6.89 MPa).

8. The triaxial force pin sensor of claim 6, further comprising
a triaxial force pin sensor array module (130) comprising two triaxial force pin sensor arrays mounted together with a circuit card (120) disposed therebetween;
a first set of strain gauges (112) mounted to the shear plate section (87a-87h) of the upper portion (46a-46h) of each cantilever force pin (36a-36h);
second and third sets of strain gauges (114, 116) mounted to the intermediate portion (56a-56h) of each cantilever force pin; and
the first, second and third sets of strain gauges being connected by electrical wires to the circuit card.

9. A method of measuring forces comprising the steps of:
utilizing a triaxial force pin sensor array (10) to measure forces applied to an upper contact surface (42a-42h) on an upper portion (46a-46h) of one or more cantilever force pins (36a-36h) mounted at an opposite base portion end (66a-66h) integral with a base portion (40) of a support structure (12) supporting an array (10) of one or more adjacent cantilever force pins, each of the cantilever force pins having an intermediate portion (56a-56h) of reduced cross section between the upper portion and the base portion and having two slots (90a-90h, 92a-92h) disposed across the upper portion of the cantilever force pin in spaced relation to the upper contact surface to form a shear plate section (87a-87h);
measuring shear plate signals with a first set of strain gauges (112) mounted to the shear plate section, the shear plate signals corresponding to the normal force (F_{z}) applied to the upper contact surface; and
measuring forces tangential to the upper contact surfaces with second (114) and third (116) sets of strain gauges mounted to the intermediate portion of the cantilever force pins, the force signals corresponding to the tangential forces applied in the fore-aft and/or lateral directions to the upper contact surface.

10. The method of claim 9, further including the steps of:
conditioning and processing (132) the shear plate and force signals from the first, second and third sets of strain gauges; and
determining the local pressure and the tangential forces applied to the upper contact surface of each of the one or more cantilever force pins.

## Patentansprüche

1. Dreiachsen-Kraftstiftsensor, umfassend
einen Auslegerkraftstift (36b), der einen oberen Abschnitt (46b) mit einer oberen Kontaktfläche (42b) aufweist, um die auf die obere Kontaktfläche wirkende örtliche Normalkraft und/oder Tangentialkräfte zu messen; und einen Basisabschnitt (66b), der einstückig mit einem Basisabschnitt (40) eines Trägeraufbaus (12) ausgebildet ist;
wobei der Auslegerkraftstift einen Zwischenabschnitt (56b) mit verringertem Querschnitt zwischen dem oberen Abschnitt und dem Basisabschnitt aufweist; und
zwei Schlitze (90b, 92b), die quer durch den oberen Abschnitt des Auslegerkraftstiftes in beabstandeter Beziehung zu der oberen Kontaktfläche angeordnet sind, um ein Scherplattenteilstück (87b) zu bilden, wobei sich jeder der beiden Schlitze zu in entgegengesetzte Richtungen weisenden Seitenflächen (52b, 54b) des Auslegerkraftstiftes öffnet und in anderen Abständen von der oberen Kontaktfläche angeordnet ist.

2. Dreiachsen-Kraftstiftsensor nach Anspruch 1, wobei der verringerte Querschnitt des Zwischenabschnitts sich um den Umfang des Kraftstiftes herum erstreckt, so daß der Zwischenabschnitt rechtwinklig in bezug auf eine sich in Längsrichtung durch den Auslegerkraftstift hindurch erstreckenden Achse (44b) ist.

3. Dreiachsen-Kraftstiftsensor nach Anspruch 1, wobei der Auslegerkraftstift einen im wesentlichen quadratischen Querschnitt in einer Ebene aufweist, die normal zu einer sich in Längsrichtung durch den Auslegerkraftstift hindurch erstreckenden Achse (44b) steht.

4. Dreiachsen-Kraftstiftsensor nach Anspruch 1, der ferner eine kreisförmige Bohrung (108b) umfaßt, die sich durch den Auslegerkraftstift hindurch von dem Basisabschnitt zu dem sich an nächsten bei der oberen Kontaktfläche befindlichen Schlitz erstreckt.

5. Dreiachsen-Kraftstiftsensor nach Anspruch 1, wobei der Auslegerkraftstift aus einem Material aufgebaut ist, das eine Materialproportionalitätsgrenze von mindestens 30 000 psi (207 MPa) bis 100 000 psi (689 MPa) aufweist.

6. Dreiachsen-Kraftstiftsensor nach Anspruch 1, der ferner ein Dreiachsen-Kraftstiftsensor-Array (10) mit einer Vielzahl von Auslegerkraftstiften (36a-36h) umfaßt, die Basisabschnitte (66a-66h) aufweisen, die einstückig mit einem gemeinsamen Basisabschnitt (40) des Trägeraufbaus ausgebildet sind, so daß eine Seitenfläche (52a-52h) von einem der Vielzahl von Auslegerkraftstiften in Richtung einer Seitenfläche (54a - 54h) eines benachbarten Stiftes der Vielzahl von Auslegerkraftstiften weist.

7. Dreiachsen-Kraftstiftsensor nach Anspruch 6, der ferner eine Dichtungsmasse um jeden Stift der Vielzahl von Auslegerkraftstiften umfaßt, wobei die Dichtungsmasse einen Modul zwischen 100 psi (0,689 MPa) und 1000 psi (6,89 MPa) aufweist.

8. Dreiachsen-Kraftstiftsensor nach Anspruch 6, ferner umfassend:
ein Dreiachsen-Kraftstiftsensor-Array-Modul (130) mit zwei Dreiachsen-Kraftstiftsensor-Arrays, die aneinander mit einer dazwischen angeordneten Leiterplatte (120) befestigt sind;
einen ersten Satz Dehnungsmesser (112), der an dem Scherplattenteilstück (87a-87h) des oberen Abschnitts (46a-46h) jedes Auslegerkraftstiftes (36a-36h) befestigt ist;
einen zweiten und einen dritten Satz Dehnungsmesser (114, 116), die an dem Zwischenabschnitt (56a-56h) jedes Auslegerkraftstiftes befestigt sind; und wobei
der erste, der zweite und der dritte Dehnungsmesser durch Elektrodrähte mit der Leiterplatte verbunden sind.

9. Verfahren zum Messen von Kräften, mit den Schritten, daß:
ein Dreiachsen-Kraftstiftsensor-Array (10) dazu verwendet wird, Kräfte zu messen, die auf eine obere Kontaktfläche (42a-42h) an einem oberen Abschnitt (46a-46h) von einem oder mehreren Auslegerkraftstiften (36a-36h) aufgebracht werden, die an einem entgegengesetzten Basisabschnittende (66a-66h) befestigt sind, das einstückig mit einem Basisabschnitt (40) eines Trägeraufbaus (12) ausgebildet ist, der ein Array (10) von einem oder mehreren benachbarten Auslegerkraftstiften trägt, wobei jeder der Auslegerkraftstifte einen Zwischenabschnitt (56a-56h) mit verringertem Querschnitt zwischen dem oberen Abschnitt und dem Basisabschnitt aufweist und zwei Schlitze (90a-90h, 92a-92h) besitzt, die quer durch den oberen Abschnitt des Auslegerkraftstiftes in beabstandeter Beziehung zu der oberen Kontaktfläche angeordnet sind, um ein Scherplattenteilstück (87a-87h) zu bilden;
Scherplattensignale mit einem ersten Satz Dehnungsmesser (112) gemessen werden, die an dem Scherplattenteilstück befestigt sind, wobei die Scherplattensignale der auf die obere Kontaktfläche aufgebrachten Normalkraft (F_{z}) entsprechen; und
zu den oberen Kontaktflächen tangentiale Kräfte mit einem zweiten (114) und einem dritten (116) Satz Dehnungsmesser gemessen werden, die an dem Zwischenabschnitt der Auslegerkraftstifte befestigt sind, wobei die Kraftsignale den in den Längs- und/oder Querrichtungen auf die obere Kontaktfläche aufgebrachten Tangentialkräften entsprechen.

10. Verfahren nach Anspruch 9, das ferner die Schritte umfaßt, daß:
die Scherplatten- und Kraftsignale von dem ersten, dem zweiten und dem dritten Satz Dehnungsmesser aufbereitet und verarbeitet werden (132); und
der örtliche Druck und die Tangentialkräfte, die auf die obere Kontaktfläche von jedem des einen oder der mehreren Auslegerkraftstifte aufgebracht werden, bestimmt werden.

## Revendications

1. Capteur de forces triaxiales du type à broche, comprenant :
une broche de mesure de forces en porte-à-faux (36b) possédant une portion supérieure (46b) munie d'une surface de contact supérieure (42b) pour mesurer la force perpendiculaire locale et/ou les forces tangentielles s'exerçant sur la surface de contact supérieure ; et une portion de base (66b) solidaire d'une portion de base (40) d'une structure de support (12) ;
la broche de mesure de forces en porte-à-faux possédant une portion intermédiaire (56b) de section transversale réduite entre la portion supérieure et la portion de base ; et
deux fentes (90b, 92b) disposées à travers la portion supérieure de la broche de mesure de forces en porte-à-faux à l'écart de la surface de contact supérieure pour former une section de plaque de sûreté (87b), chacune des fentes s'ouvrant sur des surfaces latérales opposées l'une à l'autre (52b, 54b) de la broche de mesure de forces en porte-à-faux et étant disposée à différentes distances par rapport à la surface de contact supérieure.

2. Capteur de forces triaxiales du type à broche selon la revendication 1, dans lequel la section transversale réduite de la portion intermédiaire s'étend autour du périmètre de la broche de mesure de forces de telle sorte que la portion intermédiaire est rectangulaire par rapport à un axe (44b) s'étendant en direction longitudinale à travers la broche de mesure de forces en porte-à-faux.

3. Capteur de forces triaxiales du type à broche selon la revendication 1, dans lequel la broche de mesure de forces en porte-à-faux possède une section transversale essentiellement carrée dans un plan perpendiculaire à un axe (44b) s'étendant en direction longitudinale à travers la broche de mesure de forces en porte-à-faux.

4. Capteur de forces triaxiales du type à broche selon la revendication 1, comprenant en outre un alésage circulaire (108b) s'étendant à travers la broche de mesure de forces en porte-à-faux depuis la portion de base jusqu'à la fente disposée le plus près de la surface de contact supérieure.

5. Capteur de forces triaxiales du type à broche selon la revendication 1, dans lequel la broche de mesure de forces en porte-à-faux est construite à partir d'une matière possédant une limite proportionnelle d'au moins 30.000 psi (207 MPa) à 100.000 psi (689 MPa).

6. Capteur de forces triaxiales du type à broche selon la revendication 1, comprenant en outre une matrice de capteurs de forces triaxiales du type à broche (10) comprenant plusieurs broches de mesure de forces en porte-à-faux (36a - 36h) possédant des portions de base (66a -66h) solidaires à une portion de base commune (40) de structure de support de telle sorte qu'une surface latérale (52a - 52h) d'une broche de mesure de forces parmi l'ensemble des broches de mesure de forces en porte-à-faux est opposée à une surface latérale (54a - 54h) d'une broche de mesure de forces adjacente parmi l'ensemble des broches de mesure de forces en porte-à-faux.

7. Capteur de forces triaxiales du type à broche selon la revendication 6, comprenant en outre un agent d'étanchéité autour de chaque broche de mesure de forces de l'ensemble des broches de mesure de forces en porte-à-faux, l'agent d'étanchéité possédant un module entre 100 psi (0,689 MPa) et 1000 psi (6,89 MPa).

8. Capteur de forces triaxiales du type à broche selon la revendication 6, comprenant en outre
un module de matrices de capteurs de forces triaxiales du type à broche (130) comprenant deux matrices de capteurs de forces triaxiales du type à broche montées de manière conjointe avec une carte de circuits imprimés (120) disposée entre elles ;
un premier jeu de jauges de contraintes (112) monté sur la section de plaque de sécurité (87a - 87h) de la portion supérieure (46a - 46h) de chaque broche de mesure de forces en porte-à-faux (36a - 36h) ;
des deuxième et troisième jeux de jauges de contraintes (114, 116) montés sur la portion intermédiaire (56a - 56h) de chaque broche de mesure de forces en porte-à-faux ; et
les premier, deuxième et troisième jeux de jauges de contraintes étant reliés par des fils électriques à la carte de circuits imprimés.

9. Procédé pour mesurer des forces, comprenant les étapes consistant à :
utiliser une matrice de capteurs de forces triaxiales du type à broche (10) afin de mesurer les forces s'exerçant sur la surface de contact supérieur (42a - 42h) de la portion supérieure (46a - 46h) d'une ou de plusieurs broches de mesure de forces en porte-à-faux (36a - 36h) montées sur une extrémité opposée de portion de base (66a - 66h) solidaire avec une portion de base (40) d'une structure de support (12) supportant une matrice (10) d'une ou de plusieurs broches de mesure de forces adjacentes en porte-à-faux, chacune des broches de mesure de forces en porte-à-faux possédant une portion intermédiaire (56a - 56h) de section transversale réduite entre la portion supérieure et la portion de base et possédant deux fentes (90a - 90h, 92a - 92h) disposées à travers la portion supérieure de la broche de mesure de forces en porte-à-faux à l'écart de la surface de contact supérieure pour former une section de plaque de sûreté (87a - 87h) ;
mesurer des signaux de la plaque de sûreté avec un premier jeu de jauges de contraintes (112) monté sur la section de plaque de sûreté, les signaux de la plaque de sûreté correspondant à la force perpendiculaire (Fz) s'exerçant sur la surface de contact supérieure ;
mesurer les forces tangentielles s'exerçant sur les surfaces de contact supérieures avec des deuxièmes (114) et troisièmes (116) jeux de jauges de contraintes montées sur la portion intermédiaire des broches de mesure de forces en porte-à-faux, les signaux de forces correspondant aux forces tangentielles s'exerçant dans les directions longitudinales et/ou latérales par rapport à la surface de contact supérieure.

10. Procédé selon la revendication 9, englobant en outre les étapes consistant à :
conditionner et traiter (132) les signaux de la plaque de sûreté et de forces émis par les premier, deuxième et troisième jeux de jauges de contraintes ; et
déterminer la pression locale et les forces tangentielles s'exerçant sur la surface de contact supérieure de chaque broche de mesure de forces parmi l'ensemble des broches de mesure de forces en porte-à-faux.
